# EUROPEAN PATENT SPECIFICATION

(11) **EP 3 029 487 B1**
(45) Date of publication and mention of the grant of the patent: **19.02.2020**
(21) Application number: 14195623.5
(22) Date of filing: 01.12.2014
(51) Int. Cl.: G01S 13/06, G01S 13/89, G06K 9/62, G01S 5/02, G01S 7/295, G01C 21/00

(54) **A method and a device for determining a position of a water vehicle**
Verfahren und Vorrichtung zur Bestimmung einer Position eines Wasserfahrzeugs
Procédé et dispositif pour déterminer une position d'un véhicule aquatique

(43) Date of publication of application: 08.06.2016
(73) Proprietor: Fraunhofer-Gesellschaft zur Förderung der angewandten Forschung e.V., 80686 München (DE)
(72) Inventor: Jonas, Mathias, 18057 Rostock (DE); Vahl, Matthias, 18059 Rostock (DE); Zhou, Zhiliang, 01217 Dresden (DE)
(74) Representative: Ramrath, Lukas

(56) References cited:
- GB-A- 2 025 722
- US-A1- 2010 188 290
- US-B1- 8 154 438
- NOBUMICHI ISHIMURA ET AL: "AUTOMATIC FIXING OF SHIP POSITION BY SIMULATION-AND-MATCHING", COMPUTER VISION GRAPHICS AND IMAGE PROCESSING, ACADEMIC PRESS, DULUTH, MA, US, vol. 51, no. 1, 1 July 1990 (1990-07-01), pages 38-53, XP000165480,

## Description

The invention relates to a method and a device for determining a position of a water vehicle, in particular underway at the surface of seas and oceans.

Water vehicles such as boats or vessels usually use GNSS-based systems for determining their position within a global reference coordinate system. This position is then used for navigation purposes.

The reliability, however, of GNSS-based systems for the determination of a position depends on failure-free operability of that system. The operability can be influenced by solar wind, space debris or so-called GNSS-jammers with a significant impact on GNSS-signals.

Alternative systems for determining a position use a measured depth under keel and a comparison with sea charts in order to determine a position. These approaches are, however, not very precise.

In a coastal region, radar-supported and visual-based observations of land marks or sea marks can be used for navigation purposes. The document "J. Giro et. al., Automatic ship's position fixing by matching chart and radar images. In: International symposium on Ship Operation Automation, ISSOA- Genova (1982)" discloses a method using topographic information of a coastal region for the determination of a position.

US 8,154,438 B1 discloses a latitude/longitude registration apparatus comprising:
a digital nautical chart server for providing pixel image representations of a world-wide map, including nautical features, together with respective latitude/longitude coordinates,
a range detector sensor for providing return images representing reflected local nautical features and the current local location, and a correlator for correlating the pixel representations and the return images of the local features to provide a registration of the current local latitude/longitude coordinates.

Another method uses a comparison of radar images of a coast line with a digitally mapped coast line for the determination of the position. Using image processing methods, a correspondence between the radar image and the digital map-based information is determine to allow a registration of the radar image. This is e.g. disclosed in the document "Yang et al: Method of Image Overlay on Radar and Electronic chart. In: Journal of Chinese Inertial Technology 18 (2010), April, no. 2."

This method, however, is used for a fine determination of the position, wherein an always preceding coarse determination of the position is achieved by using GPS information. Moreover, the method is not sufficiently reliable in regions where the radar signal is reflected beyond the coast line. In this case, the apparent coast line as determined in the radar image cannot be unambiguously assigned to a coast line in the map.

A technical problem is therefore to provide a method and a device for determining a position of a water vehicle independent of GNSS-based signal_{sf}, wherein a precise, reliable and computationally effective determination of the position is provided.

The solution to the aforementioned problem is provided by the method according to claim 1 and the device according to claim 15. Advantageous embodiments are provided by the subject- matter of the sub-claims.

A method for determining a position of a water vehicle such as a boat or vessel is proposed. Generally, the term water vehicle refers to any vehicle which is able to ride on or over water.

A radar image which can also be referred to as acquired radar image of a coastal region is, in particular sequentially or continuously, generated by a vehicle-based radar sensor system. The radar image can denote a two dimensional image with a predetermined number of pixels. In this case, the radar image width can correspond to predetermined number of pixels, e.g. one hundred pixels. Further, the radar image height can also correspond to a predetermined number of pixels, e.g. one hundred pixels.

As will be explained in more detail later, the radar image can also be a result of a fusion of multiple radar images which are acquired sequentially, e.g. with a predetermined frequency, e.g. 4/min. A fused radar image can e.g. be generated from multiple radar images by using a correspondence-based stitching approach or an energy-based stitching approach.

The method comprises the following steps.

In a first step, the radar image is segmented into one or more water segment(s) and one or more land segment(s). For this purpose, segmentation methods of image processing, in particular radar image processing, which are known to the skilled person can be used.

It is, for instance, possible that a first pixel value, e.g. a pixel value of zero, is assigned to all pixels of a water segment and another pixel value, e.g. a pixel value of 1, is assigned to all pixels of a land segment. In particular, the segmented radar image can be a binary image.

It is, for instance, further possible to identify a coast line within the radar image, e.g. by methods of edge detection. An image region which is located ahead of the identified coast line with respect to the vehicle-based radar sensor system as the image generating system, can be segmented as water segment. An image region, e.g. the remaining image region, which is located behind said coast line can be segmented as a land segment.

It is, for example, possible to assign a first pixel value to pixels which are located on a straight line ahead of a crossing point of the straight line with the identified coast line with respect to an origin of the radar image, wherein the origin represents a position of the radar sensor system in the radar image. The straight line intersects the origin. Another pixel value is assigned to pixels of the straight line which are located behind said crossing point. This can be performed for multiple or all possible orientations of the straight line within the image. It is, however, possible to use alternative methods of image segmentation.

It is further possible to segment the radar image into a water segment, a land segment and at least one other segment. For example, pixels which cannot be assigned to water or land can be assigned to a so-called unknown pixel segment.

In a second step, at least a portion of the segmented radar image or the complete segmented radar image is transformed by a multi-scale transformation into a transformed radar image data set. In this context, the term data set can refer to a set of numerical values and can also be referred to as data record.

The multi-scale transformation denotes a transformation which transforms the image in different resolutions levels. The transformation can e.g. be performed by applying a filter operation to different instances of the image, wherein each instance has a different resolution. Alternatively, the size of a filter kernel of the filter operation can be changed. As a result, the transformed radar image data set contains image information on or encoded within different scales of the image.

The transformed radar image data set can e.g. be provided as a vector with a predetermined (high) dimensionality, e.g. a dimensionality equal to or larger than 10⁶. Thus, the transformed radar image data set can be provided by a vector with the dimension dim1 x 1, where in dim1 denotes the dimension of the transformed radar image data set. In particular, the dimension, in particular the maximal dimension, of the transformed radar image data set is higher, in particular much higher, than the dimension of the acquired radar image. In particular, the dimension of the transformed radar image data set can be at least 10² times higher than the dimension of the acquired radar image.

In a third step, the dimension of the transformed radar image data set is reduced by a reduction operation. By the reduction operation, a reduced transformed radar image data set is provided or generated. Thus, the reduction operation can also be referred to as dimension reduction operation. The reduction operation reduces the dimensionality of the transformed radar image data set while isometric characteristics or isometric information encoded within the transformed radar image data set are or can be preserved such that the probability of the case that a distortion between the isometric characteristics or information of the unreduced and the reduced image data set is smaller than a desired (small) distortion is higher than a desired (high) probability, e.g. a probability of 0.99.

In particular, the reduction satisfies the so-called restricted isometry property condition. This means that information of the radar image on different scales are preserved while the dimensionality is reduced which advantageously allows a more effective computational handling of the image information.

By the reduction operation, the dimensionality, in particular the maximal dimensionality, of the transformed radar image data set can be reduced to another predetermined dimension, e.g. a dimension of 50. In particular the dimension of the reduced transformed radar image data set can be smaller, in particular much smaller, than the dimension of the transformed radar image data set. More particular, the dimension of the reduced transformed radar image data set can be smaller than or equal to the dimension of the acquired radar image.

In a fourth step, a similarity measure of a similarity between the reduced transformed radar image data set and at least one map-based reference image data set is determined.

A position information, e.g. a position information with respect to a global reference coordinate system, is assigned to the map-based reference image data set. As will be explained later in more detail, the map-based reference image data set can be determined using a map, in particular a sea chart or a terrain map. In particular, the map-based reference image data set can be determined based on a selected region of the map with a known position. This, in turn, means that a position, e.g. a position of a geometrical center of the region, can be assigned to the region and thus to the map-based referenced image data set.

The similarity measure can represent a similarity of at least one or multiple properties of the compared image data sets. The similarity measure can be proportional to the similarity, e.g. the more similar the image data sets are, the higher is the similarity measure.

In a fifth step, the reduced transformed radar image data set and the map-based reference image data set are classified as corresponding image data sets if a similarity criterion is fulfilled, in particular if the similarity measure is higher than a predetermined threshold value.

In a sixth step, the position of the water vehicle, e.g. the position in the global reference coordinate system, is determined depending on the position information assigned to the map-based reference image data set if the reduced transformed radar image data set and the map-based reference image data set are classified as corresponding image data sets. Of course, the position of the water vehicle can additionally be determined depending on characteristics of the radar sensor system used for acquiring the radar image. This means that a position of the water vehicle relative to the radar image and thus to the reduced transformed radar image data set can be determined. This information can then be used to determine the vehicle position within the map-based coordinate system. A conversion of the map-based coordinate system to the global reference coordinate system can be known.

It is, of course, possible to determine an initial position estimate of the water vehicle based on the last known position of the water vehicle, the time duration between an actual point in time and the point in time of the determination of the last known position and a direction of travel of the water vehicle. The direction of travel of the water vehicle can e.g. be determined by vehicle-based systems, e.g. by using the output signals of a gyroscope, a compass or an inertial measurement unit. The initial position estimate can be e.g. used to determine a region of the map-based image, e.g. in the form of a number of one or multiple map-based reference image data set(s), to which the radar image should be compared.

It is also possible that a current orientation of the water vehicle is determined, e.g. by using the aforementioned output signals of the gyroscope, the compass and/or the inertial measurement unit. The orientation information can be used to determine an orientation of the radar image acquired by the radar sensor system within the global reference coordinate system. This, in turn, allows to transform, e.g. rotate, the acquired radar image into an orientation-normalized radar image before the multi-scale transformation, wherein the orientation of the orientation-normalized radar image corresponds to a reference orientation, e.g. of the map-based image. It is, for instance, possible to determine a north direction relative to the water vehicle and the used radar sensor system and to transform the acquired radar image such that a vertical image axis points into the north direction. This advantageously accelerates the computational time required for the proposed method.

The proposed method advantageously allows a reliable, precise and computationally effective, in particular fast, determination of the position of the water vehicle independent of e.g. GNSS-signals. Further, the determination is based on information and means available and bound to the water vehicle itself.

In another embodiment, a map-based reference image data set is generated by transforming at least a portion of a map-based image by the multi-scale transformation into a transformed map-based image data set. This means, the same transformation or transformation operation is used to generate the transformed radar image data set and the transformed map-based image data set.

In particular, the map-based image or the portion of the map-based image can have the same dimensionality, e.g. the same image width and the same image height, as the acquired radar image. As will be explained later, the map-based image can also be segmented into a water segment and a land segment.

Further, the dimension of the transformed map-based image data set is reduced by the reduction operation. This means, that a reduced transformed map-based image data set and the reduced transformed radar image data set are generated by using the same reduction operation. In summary, the map-based reference image data set which corresponds to the reduced transformed map-based image data set can have the same dimensionality as the aforementioned reduced transformed radar image data set.

This advantageously allows a reliable comparison of radar image information and map-based information.

In another embodiment, the radar image and the map-based image are binary images. For the possibility that the acquired radar image is a non-binary image, this non-binary image is transformed into a binary image and then segmented. It is also possible, that non-binary radar image is transformed into a binary image via the aforementioned segmentation. Further, the map-based image can be a non-binary image. As in the case of the radar image, the non-binary map-based image can be first transformed into a binary image and then segmented. Alternatively, the non-binary map-based image can be transformed into the binary map-based image by the segmentation.

A binary image advantageously allows encoding the information of land and water within the image with maximal compactness.

In another embodiment, the map is provided by a nautical chart or a terrain map, in particular in a digital form. Map information can e.g. be stored in a data storage unit. It is, however, also possible to determine, e.g. in a pre-processing step, one or more map-based reference image data sets based on the map information. Then the aforementioned map-based reference image data set(s) can be stored in the data storage unit. This advantageously allows applying only one pre-processing step for preparing map-based reference image data set(s) for being used in the proposed method.

In another embodiment, a plurality of map-based reference image data sets is determined, in particular map-based reference image data sets corresponding to different sub-regions of the map, respectively. Then, the similarity measure of the similarity between the reduced transformed radar image data set and at least two or each map-based reference image data set(s) is determined.

It is possible that the aforementioned sub-regions are adjacent but non-overlapping sub-regions of the map. Preferably, the sub-regions are overlapping sub-regions. This increases an accuracy of the proposed method.

As mentioned before, the plurality of map-based reference image data sets can be determined in a pre-processing preparation step and then be stored in a data storage unit for being used in different cycles of the proposed method.

It is, for instance possible, to determine the map-based reference image data set which has the highest similarity measure with respect to the reduced transformed radar image data set. This can e.g. be done by determining the similarity measure for a selected or all of the map-based reference image data sets and then determine the set with the highest similarity measure. It is also possible to determine the map-based reference image data set which has the highest similarity measure with respect to the reduced transformed radar image data set by an optimization method.

In another embodiment, the reduced transform radar image data set and a selected map-based reference image data set are classified as corresponding data sets if the similarity criterion is fulfilled and the similarity measure is higher than the remaining similarity measures. This advantageously increases a robustness and a reliability of the proposed position determination.

In a preferred embodiment, the highest similarity measure is determined based on an optimization approach. An optimization approach denotes an approach wherein an optimization algorithm is applied to find the highest similarity measure instead of evaluating all possible similarity measures in a brute force way.

This means that the similarity measure is not determined for all possible pairs of the radar image data set and stored map-based reference image data sets in order to find the highest similarity measure.

In particular, the highest similarity measure can be determined based on a hierarchical approach. A hierarchical approach can denote a search-tree-based approach, wherein a search method based on search tree structure is applied.

For example, a so-called k-nearest-neighbor-method can be used in order to determine the highest similarity measure. Such a method is known to the skilled person.

This advantageously increases a computational speed. It is, however, also possible to apply a so-called linear search for determining the highest similarity measure.

In a preferred embodiment, the similarity measure is determined depending on a distance between the reduced transformed radar image data set and a map-based reference image data set. The distance can e.g. be calculated by using the so-called I2-norm. The similarity measure can e.g. be inversely proportional to the distance, e.g. the smaller the distance, the higher the similarity measure.

It is, however, also possible to use other distance measures, e.g. the so-called p-norm. A distance measure can also be determined depending on an angle between the reduced transformed radar image data set and the map-based reference image data set.

In a preferred embodiment, the multi-scale transformation comprises or is provided by a ridgelet-transformation. Alternatively, the multi-scale transformation comprises or is provided by a curvelet-transformation. Most preferably, the multi-scale transformation comprises or is provided by wavelet-transformation. Alternatively, the multi-scale transformation comprises or is provided by a cosine-transformation.

Using said transformations advantageously allows generating a transformed image data set with a high information density of given topographic realities.

In another embodiment, the image, in particular the radar image or the map-based image, or at least a portion thereof is transformed by a transformation operation, wherein a transformation pixel pattern of a predetermined size and/or type is shifted across the image or at least the part thereof, wherein at each shifting position of the transformation pixel pattern, a sum of the pixel intensity product is calculated, wherein the sum provides a part of the transformed radar image data set. The transformation pixel pattern can also be referred to as transformation mask.

A set of pre-determined basic transformation pixel patterns can exist, wherein different basic transformation pixel patterns can vary in terms of dimensionality and/or pixel values.

The pixel pattern can be a pattern, wherein either a value of 1 or a value of -1 is assigned to each pixel.

That the transformation pixel pattern is shifted across the image can mean that at each shifting position, an image region of the same size as the pixel pattern is selected. The transformation pixel pattern can e.g. be shifted by one or more pixels along the image width direction and/or the image height direction. Pixels of the selected image region and pixels of the transformation pixel pattern with the same pixel coordinates are referred to as corresponding pixels. The sum of the pixel intensity products is then calculated by summing the products of the pixel intensities of corresponding pixels.

It is possible that image pixels are weighted before the product of the pixel intensities is calculated. Weighting factors can be chosen depending on pixel values of the transformation pixel pattern and thus independent of a pixel value of image pixels. For instance, a weighting factor of -1 can be applied to the value of an image pixel if the corresponding pixel of the transformation pixel pattern is smaller than zero, wherein a weighting factor of +1 can be applied to the value of an image pixel if the corresponding pixel of the transformation pixel pattern is equal to or larger than zero. It is, of course, possible to choose other weighting factors or weighting schemes. In particular, the weighting factors and weighting schemes can be chosen application-dependent.

The proposed transformation operation advantageously allows a computationally effective determination of the transformed image data set.

In a preferred embodiment, the transformed image data set is determined by a plurality of transformation operations, wherein a size and/or type of the transformation pixel pattern and/or a size of the image is varied for different, e.g. consecutive, transformation operations.

For instance, the size of the transformation pixel pattern can be varied by scaling the aforementioned basic pixel patterns. In this case, a basic pixel pattern can be scaled in a width direction and/or a height direction.

Alternatively, it is possible to vary the width of the image, e.g. by scaling the image by a predetermined factor, e.g. a factor of 1/2. This can also be referred to as a pyramidic-scaling approach.

In summary, the transformation operation is selected such that image information at different scales are mapped into the transformed image data set.

In another embodiment, an image-based similarity measure of a similarity of the radar image portion corresponding to the reduced radar image data set and the map-based image portion corresponding to the map-based reference image data set is determined.

An image-based similarity measure can be any similarity measure known to a skilled person, in particular a similarity measure known from image registration procedures. Image-based similarity measures can e.g. be contour-based similarity measures or intensity-based similarity measures or a feature-based, e.g. a corner-based, measures.

The reduced transformed radar image data set and the map-based reference image data set are classified as corresponding image data sets if an image-based similarity criterion is fulfilled, in particular if the image-based similarity measure is higher than a predetermined threshold value. In this case, the similarity measure of the reduced transformed radar image data set and a map-based reference image data set can be used to classify candidate pairs of corresponding image portions.

Evaluating the image-based similarity measure advantageously allows selecting the most similar image regions and, thus, to reduce an error rate of the proposed method.

In particular, the negative effect of losing image information due to the reduction operation can be compensated by the subsequent image comparison.

In a preferred embodiment, a reduction operation is a random projection. The random projection denotes a multiplication of the transformed radar image data set or the transformed map-based image data set with a reduction matrix. To each entry of the reduction matrix, a random value of or provided by a pre-determined probability distribution is assigned.

It is e.g. possible that to each entry of the reduction matrix a value of sqrt (3) x 1 is assigned with a probability of 1/6, a value of sqrt (3) x 0 is assigned with a probability of 2/3 or a value of sqrt (3) x -1 is assigned with a probability of 1/6.

The reduction matrix can have pre-determined number of rows, wherein the number rows corresponds to the desired dimensionality of the reduced transformed radar image data set or reduced transformed map-based image data set. The number of columns can be equal to the dimensionality of transformed radar image data set or the transformed map-based image data set.

Alternatively, a Gaussian distribution can be used to assign a value to each entry of the reduction matrix. It has been shown that the proposed random projection has the aforementioned restricted isometry property. In other words, the proposed random projection advantageously allows reducing the dimensionality while preserving the image information at different scales.

In another embodiment, at least one landmark is identified in the radar-based image. Such a landmark can e.g. be provided by a tall building, electrical towers, wind power plants, chimneys, leading lights or light houses.

In summary, a landmark can be provided by a man-made structure or a natural structure which has a pre-determined radar reflectivity or radar image characteristics. Further, such landmarks are usually mapped, e.g. in a sea chart or terrain map, and available for a long term.

A corresponding landmark is identified in a map-based image, wherein the segmentation of the radar image into a water segment and a land segment and, if applicable, into another segment is performed using information of the map-based image. Based on the landmark, an image region within the map can be identified which corresponds to or comprises the topographic structures which are imaged by the radar image.

The map used to identify corresponding landmarks can be a digital terrain map or a sea chart. If, however, no corresponding landmark can be identified in a map, the detected landmark can be discarded.

It is possible to correct and/or complete the radar image based on information of the map-based image. For instance, missing parts of a coast line in the radar image can be identified in the map-based image, wherein the coast line or a course of the coastline in the radar image can be completed using information of the map-based image.

Such a correction and/or completing procedure can comprise object detection operations, registration operations and/or adding operations.

It is also possible to identify a potential coast line within the radar-based image. Further, contour lines can be extracted from the map-based image, e.g. a digital terrain model of the coastal region. Further, the identified coast line or a course of the identified coast line or a part thereof can be compared to the extracted contour lines or a part thereof. Then, the identified coast line or a part thereof can be assigned to a contour line or a part thereof if a similarity criterion of the similarity between the identified coast line and the contour line is fulfilled, e.g. a deviation between the coast line and the contour line is smaller than a pre-determined threshold value. Depending on the identified corresponding contour line, the identified potential coast line can be completed and/or corrected using information of the map-based image, e.g. the digital terrain map.

This advantageously allows the correction of the segmentation of the radar image if the radar signal is not reflected by the coast line but by topographic structures in the back country.

Further proposed is a device for determining a position of a water vehicle, wherein the device comprises a vehicle-based radar sensor system and at least one evaluation unit. A radar image of a coastal region is, in particular continuously or sequentially, generatable, i.e. can be generated, by the vehicle-based radar sensor system, wherein
- the radar image is segmentable, i.e. can be segmented, into a water segment and a land segment,
- at least a portion of the radar image is transformable by a multi-scale transformation into a transformed radar image data set,
- a dimension of the transformed radar image data set is reducable, i.e. can be reduced, by a reduction operation,
- a similarity measure of a similarity between the reduced transformed radar image data set and at least one map-based reference image data set is determinable, wherein a position information is assigned to the map-based reference image data set,
- the reduced transformed radar image data set and the map-based reference image data set are classifiable as corresponding image data sets if a similarity criterion is fulfilled,
- the position of the water vehicle is determinable depending on the position information assigned to the map-based reference data set if the reduced transformed radar image data set and the map-based reference image data set are classified as corresponding image data sets.

Thus, the proposed device is designed such that a method according to one of the previously described embodiments can be performed by using the device.

Of course, the device can comprise a data storage unit for storing map information.

The invention will be described with reference to the attached Figures. The Figures show:
- Fig. 1: a schematic flow chart of the method according to the invention,
- Fig. 2: a schematic block diagram of a device according to the invention,
- Fig. 3a: a first basic pixel pattern,
- Fig. 3b: a second basic pixel pattern,
- Fig. 3c: a third basic pixel pattern,
- Fig. 3d: pixel patterns obtained by scaling,
- Fig. 4: a schematic representation of the calculation of a sum of products of pixel intensities

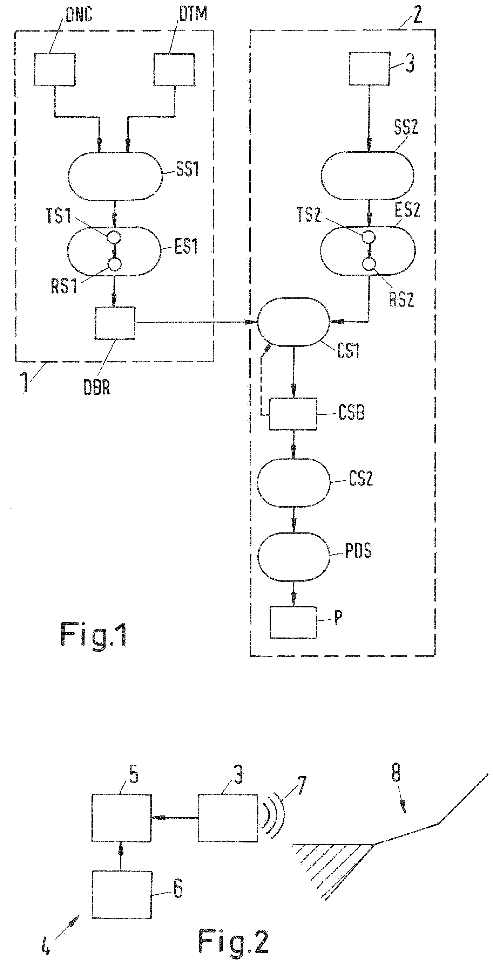

In Fig. 1, a schematic flow chart of a method for determining a position of a water vehicle (not shown) is illustrated. In a pre-processing part 1 of the proposed method, a data base DBR of map-based reference image data sets is generated.

To generate this data base DBR, map-based images are extracted from a digital terrain model DTM and from a digital nautical chart DNC which are both digital maps. In a segmentation step SS1, water segments and land segments are identified within the respective images or within a fused image generated by fusing corresponding images of the digital terrain model DTM and the digital nautical chart DNC. In particular, a binary image is generated within the segmentation step SS1, wherein a first pixel value, e.g. a pixel value of 0, is assigned to all pixels of water segments and another pixel value, e.g. a pixel value of 1, is assigned to all pixels of land segments.

In an encoding step ES1, two steps are performed. In a transformation step TS1, the segmented map image is transformed by a multi-scale transformation into a transformed map-based image data set. The multi-scale transformation can e.g. be a Haar-wavelet transformation. The map image from the digital terrain model DTM and/or the digital nautical chart DNC can have a pre-determined dimension, e.g. a predetermined image width and/or a predetermined image height. To this image, a known position, e.g. a position in a map-based coordinate system or a global reference coordinate system, can be assigned, e.g. a position of a geometric center point of the image or a position of an upper left corner of the image.

In the transformation step TS1, the transformed map-based image data set is generated as a transformed image data vector with one row and a pre-determined number of columns, wherein the number of rows corresponds to the desired dimensionality, e.g. a dimensionality larger than 10⁶.

In a reduction step RS1, the dimension of the transformed map-based image data set is reduced by a reduction operation. In particular, the transformed image data vector is multiplied by a reduction matrix, wherein the number of rows of the reduction matrix corresponds to the number of columns of the transformed radar image data set vector and the number of columns corresponds to a desired dimensionality of the reduced transformed map-based image data set. As a result, the reduced transformed map-based image data set is provided by a reduced transformed map-based image data vector, wherein the vector has one row and a number of columns which corresponds to the desired dimensionality of the reduced transformed map-based image data set. This reduced transformed map-based image data set is stored as map-based reference image data set in the data base DBR with the corresponding position information.

This can be repeated for the total map information, e.g. for the total digital terrain model DTM and/or digital nautical chart DNC. This means that multiple images of the predetermined dimension are extracted from the digital terrain model DTM and/or the digital nautical chart DNC and processed in order to generate a data base DBR entry. These images which can correspond to sub-regions of the maps of the digital terrain model DTM and/or the digital nautical chart DNC can e.g. overlap.

During the runtime 2 of the method, a radar image is generated by a radar sensor 3.

The radar image is segmented into a land segment and a water segment. The segmented image can be a binary image as in the case of the segmented map-based image. The segmentation of the radar image is performed within segmentation step SS2 of the radar image. In an encoding step ES2 of the radar image, the segmented radar image is transformed by the previously described transformation into a transformed radar image data set, in particular in form of a transformed radar image data vector in a transformation step TS2. Within the transformation step TS2 of the radar image, the same multi-scaled transformation is applied as within the transformation step TS1 of the segmented map-based image.

Accordingly, a dimension of the transformed radar image data set is reduced by a reduction operation in a reduction step RS2, wherein the same reduction operation as in the reduction step RS1 of the transformed map-based image data set is applied to the transformed radar image data set.

While the number of columns of the transformed map-based image data set and the transformed radar image data set can be equal and higher than 10⁶, the dimension of the reduced transformed map-based reference image data set and the reduced transformed radar image data set are also equal but much smaller, e.g. equal to 50.

The reduced transformed radar image data set is then compared to the map-based reference image data sets stored in the data base DBR, wherein the map-based reference image data sets correspond to the previously explained reduced transformed map-based image data sets.

In a first comparison step CS1, a similarity measure of a similarity between the reduced transformed radar image data set and one of the map-based reference image data sets is determined, wherein the similarity measure is determined as depending on the distance, e.g. inversely proportional to the distance, between the reduced transformed radar image data vector and the map-based reference image data vector according to the L2-norm.

If the distance is smaller than a predetermined threshold value, i.e. the similarity measure is higher than a predetermined threshold value, the map-based reference image data set is classified as a candidate set and the corresponding map-based image portion is stored in a candidate storage data base CSB.

This step can be repeated for all map-based reference image data sets within the data base DBR or an optimization approach, e.g. a hierarchical approach, can be taken in order to identify the map-based reference image data set which has the highest similarity measure with respect to the current reduced transformed radar image data set.

In another comparison step CS2, an image-based comparison of the map-based image which corresponds to the selected map-based reference image data set and the radar image which corresponds to the reduced transformed radar image data set is calculated. Thus, an image-based similarity measure is calculated. If said similarity measure, e.g. an intensity-based similarity measure, is higher than a pre-determined a threshold value, the radar image and the map-based image (or map-based image portion) are classified as corresponding images. In a position determination step PDS, the position P of the water vehicle is determined depending on characteristics of the radar sensor 3 and the position information assigned to the map-based image. The position P can then be used for navigation purposes.

Fig. 2 shows a schematic block diagram of a device 4 for determining a position P (see Fig. 1) of a water vehicle (not shown). The device 4 comprises a radar sensor 3, an evaluation unit 5 and a storage medium 6 which stores the digital terrain model DTM (see Fig. 1), the digital nautical chart DNC, the data base DBR and the candidate storage data base CSB. It is shown that the radar sensor 3 emits and receives radar signals 7 which are reflected by a coastal region 8. With the evaluation unit 5, the method described with reference to Fig. 1 can be performed.

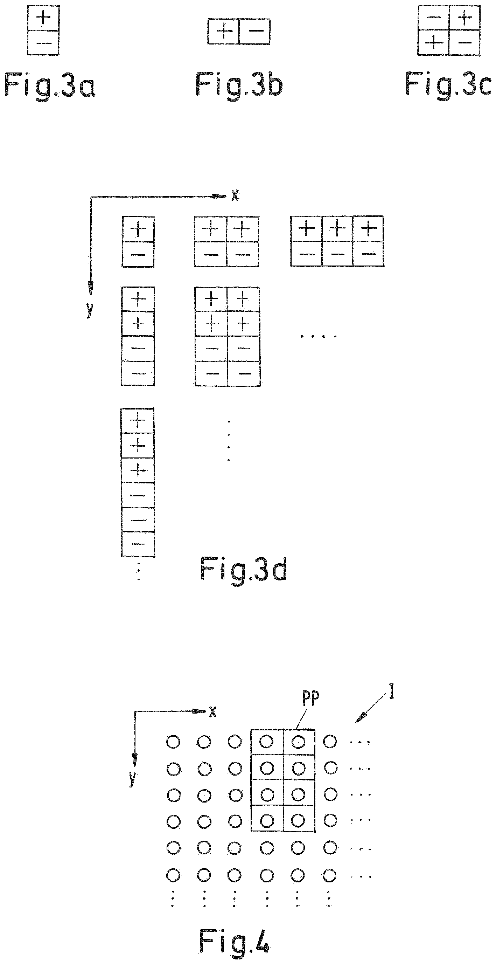

Fig. 3a shows a first basic transformation pixel pattern with a dimension of (2; 1), wherein the pixel at position (1; 1) is assigned a value of +1 and a value of -1 is assigned to the pixel at the position (2; 1). It is, of course, possible to use basic transformation pixel patterns with other layouts or other pixel values.

In Fig. 3b a second basic transformation pixel pattern is shown which has a dimension of (1; 2), wherein a value of +1 is assigned to the pixel at position (1; 1) and a value of -1 is assigned to a pixel position of (1; 2).

In Fig. 3c a third basic transformation pixel pattern is shown which has a dimension of (2; 2), wherein a pixel value of -1 is assigned to the pixels at the position (1; 1) and (2; 2) and a value of +1 is assigned to the remaining pixel positions.

Fig. 3d shows multiple pixel patterns which are a result of scaling the first basic transformation pixel pattern shown in Fig. 3a. This first basic transformation pixel pattern can be scaled a width direction x and a height direction y. The multiple pixel patterns provide transformation pixel patterns for the transformation operation.

In Fig. 4 an exemplary sub-step of a multi-scale transformation using the pixel patterns shown in Fig. 3a, Fig. 3b, Fig. 3c, Fig. 3d is shown. Shown are the pixels of an image I, wherein an image width direction is indicated by x and an image height direction is indicated by y. A transformation pixel pattern PP with a dimension of (4; 2) is shifted across the image I. In Fig. 4, it is shown that the transformation pixel pattern PP is shifted to the position (1; 4) of the image I, wherein the pixel coordinates of the image pixel which corresponds to the upper left pixel of the pixel pattern PP defines the shifting position.

An entry of the previously explained transformed radar image data vector or transformed map-based image data vector is calculated as the sum of the products of the pixel intensities of corresponding pixels of the image I and the pixel pattern PP. This means that the sum is calculated as the sum of the product of the pixel value of the image pixel at the pixel coordinates (1; 4) and the pixel value at the pixel coordinate (1; 1) of the pixel pattern PP, the product of the pixel value of the image pixel at the pixel coordinates (1; 5) and the pixel value at the pixel coordinate (1; 2) of the pixel pattern PP and so on.

It is possible that pixel values of the corresponding image pixels are weighted. For example, the pixel values of the image pixels which correspond to a transformation pattern pixel value of -1 can be multiplied with a factor of -1. The remaining pixels of the corresponding image pixels can be multiplied by a factor of +1.

Of course, the process which is exemplary shown in Fig. 4 can be performed for all possible shifting positions along the image width x and the image height y and for all or a selected number of scaled transformation pixel patterns according to Fig. 3d.

## Claims

1. Method for determining a position (P) of a water vehicle, wherein a radar image of a coastal region is generated by a vehicle-based radar sensor system (3), wherein
- the radar image is segmented into one or more water segments and one or more land segments,
- at least a portion of the radar image is transformed by a multi-scale transformation into a transformed radar image data set, wherein a multi-scale transformation denotes a transformation which transforms the radar image in different resolutions levels, wherein the transformed radar image data set contains image information on or encoded within different scales of the image,
- a reduced transformed radar image data set is provided by a dimension reduction operation, wherein a dimension of the transformed radar image data set is reduced by the dimension reduction operation while isometric characteristics or isometric information encoded within the transformed image data set are preserved,
- a similarity measure of a similarity between the reduced transformed radar image data set and a map-based reference image data set is determined, wherein position information is assigned to the map-based reference image data set,
- the reduced transformed radar image data set and the map-based reference image data set are classified as corresponding image data sets if a similarity criterion is fulfilled,
- the position of the water vehicle is determined depending on the position information assigned to the map-based reference image data set if the reduced transformed radar image data set and the map-based reference image data set are classified as corresponding image data sets.

2. The method of claim 1, **characterized in that** the map-based reference image data set is generated by transforming at least a portion of a map-based image by the multi-scale transformation into transformed map-based image data set, wherein a dimension of the transformed map-based image data set is reduced by the dimension reduction operation.

3. The method of claim 1 or 2, **characterized in that** the radar image and the map-based image are binary images.

4. The method according to one of the claims 1 to 3, **characterized in that** the map is provided by a nautical chart or a terrain map.

5. The method according to one of the claims 1 to 4, **characterized in that** multiple map-based reference image data sets are determined, wherein the similarity measure of the similarity between the reduced transformed radar image data and at least two map-based reference image data sets is determined.

6. The method according to claim 5, **characterized in that** the reduced transformed radar image data set and a selected map-based reference image data set are classified as corresponding image data sets if the similarity criterion is fulfilled and the similarity measure is higher than the remaining similarity measures.

7. The method according to claim 6, **characterized in that** the highest similarity measure is determined based on an optimization approach.

8. The method according to one of the claims 1 to 7, **characterized in that** the similarity measure is determined depending on a distance between the reduced transformed radar image data set and a selected map-based reference image data set.

9. The method according to one of the claims 1 to 8, **characterized in that** the multi-scale transformation is a ridgelet-transformation, a curvelet-transformation, a wavelet-transformation or a cosine-transformation.

10. The method according to one of the claims 1 to 9, **characterized in that** the image or at least a portion thereof is transformed by transformation operation, wherein a transformation pixel pattern of a predetermined size and/or type is shifted across the image, wherein at each shifting position of the transformation pixel pattern, a sum of the pixel intensity products is calculated, wherein the sum provides a part of the transformed image data set.

11. The method according to claim 10, **characterized in that** the transformed image data set is determined by a plurality of transformation information operations, wherein a size and/or type of the transformation pixel pattern and/or a size of the image is varied for different transformation operations.

12. The method according to one of the claims 1 to 11, **characterized in that** an image-based similarity measure of a similarity of the radar image portion corresponding to the reduced transformed radar image data set and the map-based image portion corresponding to the map-based reference image data set is determined, wherein the reduced transformed radar image data set and the map-based reference image data set are classified as corresponding image data sets if an image-based similarity criterion is fulfilled.

13. The method according to one of the claims 1 to 12, **characterized in that** a reduction operation is a random projection, wherein the random projection denotes a multiplication with a reduction matrix, wherein a random value of or provided by a pre-determined probability distribution is assigned to each entry of the reduction matrix.

14. The method according to one of the claims 1 to 13, **characterized in that** at least one landmark is identified in the radar-based image, wherein a corresponding landmark is identified in a map-based image, wherein the segmentation of the radar image into a water segment and a land segment is performed using information of the map-based image.

15. A device for determining a position (P) of a water vehicle, wherein the device is designed to perform a method according to one of the claims 1 to 14, wherein the device comprises a vehicle-based radar sensor system and at least one evaluation unit, wherein a radar image of a coastal region is generatable by the vehicle-based radar sensor system, wherein the radar image is segmentable into a water segment and a land segment, wherein at least a portion of the radar image is transformable by a multi-scale transformation into a transformed radar image data set, wherein a multi-scale transformation denotes a transformation which transforms the radar image in different resolutions levels, wherein the transformed radar image data set contains image information on or encoded within different scales of the image, wherein a reduced transformed radar image data set is providable by a dimension reduction operation, wherein a dimension of the transformed radar image data set is reducable by the dimension reduction operation while isometric characteristics or isometric information encoded within the transformed image data set are preservable, wherein a similarity measure of a similarity between the reduced transformed radar image data set and at least one map-based reference image data set is determinable, wherein a position information is assigned to the map-based reference image data set, wherein the reduced transformed radar image data set and the map-based reference image data set are classifiable as corresponding image data sets if a similarity criterion is fulfilled, wherein the position (P) of the water vehicle is determinable depending on the position information assigned to the map-based reference data set if the reduced transformed radar image data set and the map-based reference image data set are classified as corresponding image data sets.

## Patentansprüche

1. Verfahren zum Bestimmen einer Position (P) eines Wasserfahrzeugs, bei dem ein Radarbild einer Küstenregion durch ein fahrzeugbasiertes Radarsensorsystem (3) erzeugt wird, wobei
- das Radarbild in ein oder mehrere Wassersegmente und ein oder mehrere Landsegmente segmentiert wird,
- zumindest ein Abschnitt des Radarbildes durch eine Multiskalentransformation in einen transformierten Radarbilddatensatz transformiert wird, wobei eine Multiskalentransformation eine Transformation bezeichnet, die das Radarbild in unterschiedliche Auflösungsstufen transformiert, wobei der transformierte Radarbilddatensatz Bildinformationen in oder kodiert in unterschiedlichen Skalierungen des Bildes enthält,
- ein reduzierter transformierter Radarbilddatensatz durch eine Dimensionsreduktionsoperation bereitgestellt wird, wobei eine Dimension des transformierten Radarbilddatensatzes durch die Dimensionsreduktionsoperation reduziert wird, während isometrische Eigenschaften oder isometrische Informationen, die in dem transformierten Radarbilddatensatz kodiert sind, bewahrt werden,
- ein Ähnlichkeitsgrad einer Ähnlichkeit zwischen dem reduzierten transformierten Radarbilddatensatz und einem auf einer Landkarte basierenden Bezugs-Bilddatensatz bestimmt wird, wobei dem auf einer Landkarte basierenden Bezugs-Bilddatensatz Positionsinformationen zugeordnet werden,
- der reduzierte transformierte Radarbilddatensatz und der auf einer Landkarte basierende Bezugs-Bilddatensatz als korrespondierende Bilddatensätze klassifiziert werden, wenn ein Ähnlichkeitskriterium erfüllt wird,
- die Position des Wasserfahrzeugs abhängig von den Positionsinformationen bestimmt wird, die dem auf einer Landkarte basierenden Bezugs-Bilddatensatz zugeordnet sind, wenn der reduzierte transformierte Radarbilddatensatz und der auf einer Landkarte basierende Bezugs-Bilddatensatz als korrespondierende Bilddatensätze klassifiziert werden.

2. Verfahren nach Anspruch 1, **dadurch gekennzeichnet, dass** der auf einer Landkarte basierende Bezugs-Bilddatensatz durch Transformieren zumindest eines Abschnitts eines auf einer Landkarte basierenden Bildes durch die Multiskalentransformation in einen transformierten auf einer Landkarte basierenden Bilddatensatz erzeugt wird, wobei eine Dimension des transformierten auf einer Landkarte basierenden Bilddatensatzes durch die Dimensionsreduktionsoperation reduziert wird.

3. Verfahren nach Anspruch 1 oder 2, **dadurch gekennzeichnet, dass** das Radarbild und das auf einer Landkarte basierende Bild binäre Bilder sind.

4. Verfahren nach einem der Ansprüche 1 bis 3, **dadurch gekennzeichnet, dass** die Landkarte durch eine Seekarte oder eine Geländekarte bereitgestellt wird.

5. Verfahren nach einem der Ansprüche 1 bis 4, **dadurch gekennzeichnet, dass** mehrere auf einer Landkarte basierende Bezugs-Bilddatensätze bestimmt werden, wobei der Ähnlichkeitsgrad der Ähnlichkeit zwischen den reduzierten transformierten Radarbilddaten und mindestens zwei auf einer Landkarte basierenden Bezugs-Bilddatensätzen bestimmt wird.

6. Verfahren nach Anspruch 5, **dadurch gekennzeichnet, dass** der reduzierte transformierte Radarbilddatensatz und ein ausgewählter, auf einer Landkarte basierender Bezugs-Bilddatensatz als korrespondierende Bilddatensätze klassifiziert werden, wenn das Ähnlichkeitskriterium erfüllt wird und der Ähnlichkeitsgrad höher ist als die übrigen Ähnlichkeitsgrade.

7. Verfahren nach Anspruch 6, **dadurch gekennzeichnet, dass** der höchste Ähnlichkeitsgrad auf Basis einer Optimierungsmethode bestimmt wird.

8. Verfahren nach einem der Ansprüche 1 bis 7, **dadurch gekennzeichnet, dass** der Ähnlichkeitsgrad abhängig von einer Distanz zwischen dem reduzierten transformierten Radarbilddatensatz und einem ausgewählten, auf einer Landkarte basierenden Bezugs-Bilddatensatz bestimmt wird.

9. Verfahren nach einem der Ansprüche 1 bis 8, **dadurch gekennzeichnet, dass** die Multiskalentransformation eine Ridgelet-Transformation, eine Curvelet-Transformation, eine Wavelet-Transformation oder eine CosinusTransformation ist.

10. Verfahren nach einem der Ansprüche 1 bis 9, **dadurch gekennzeichnet, dass** das Bild oder zumindest ein Abschnitt davon durch eine Transformationsoperation transformiert wird, wobei ein Transformationspixelmuster einer vorgegebenen Größe und/oder Art über dem Bild verschoben wird, wobei an jeder Verschiebungsposition des Transformationspixelmusters eine Summe der Pixelintensitätsprodukte berechnet wird, wobei die Summe einen Teil des transformierten Bilddatensatzes bereitstellt.

11. Verfahren nach Anspruch 10, **dadurch gekennzeichnet, dass** der transformierte Bilddatensatz durch mehrere Transformations informations operationen bestimmt wird, wobei eine Größe und/oder Art des Transformationspixelmusters und/oder eine Größe des Bildes für unterschiedliche Transformationsoperationen variiert werden.

12. Verfahren nach einem der Ansprüche 1 bis 11, **dadurch gekennzeichnet, dass** ein bildbasierter Ähnlichkeitsgrad einer Ähnlichkeit des Radarbildabschnitts, der dem reduzierten transformierten Radarbilddatensatz entspricht, und des auf einer Landkarte basierenden Bildabschnitts, der dem auf einer Landkarte basierenden Bezugs-Bilddatensatz entspricht, bestimmt wird, wobei der reduzierte transformierte Radarbilddatensatz und der auf einer Landkarte basierende Bezugs-Bilddatensatz als korrespondierende Bilddatensätze klassifiziert werden, wenn ein bildbasiertes Ähnlichkeitskriterium erfüllt wird.

13. Verfahren nach einem der Ansprüche 1 bis 12, **dadurch gekennzeichnet, dass** eine Reduktionsoperation eine zufällige Projektion ist, wobei die zufällige Projektion eine Multiplikation mit einer Reduktionsmatrix bezeichnet, wobei jedem Eintrag der Reduktionsmatrix ein Zufallswert zugeordnet wird, der einer vorgegebenen Wahrscheinlichkeitsverteilung entspricht oder durch eine solche bereitgestellt wird.

14. Verfahren nach einem der Ansprüche 1 bis 13, **dadurch gekennzeichnet, dass** mindestens eine Landmarke in dem radarbasierten Bild identifiziert wird, wobei eine entsprechende Landmarke in einem auf einer Landkarte basierenden Bild identifiziert wird, wobei die Segmentierung des Radarbildes in ein Wassersegment und ein Landsegment unter Verwendung von Informationen aus dem auf einer Landkarte basierenden Bild durchgeführt wird.

15. Vorrichtung zum Bestimmen einer Position (P) eines Wasserfahrzeugs, wobei die Vorrichtung dafür ausgelegt ist, ein Verfahren nach einem der Ansprüche 1 bis 14 durchzuführen, wobei die Vorrichtung ein fahrzeugbasiertes Radarsensorsystem und mindestens eine Evaluierungseinheit umfasst, wobei durch das fahrzeugbasierte Radarsensorsystem ein Radarbild einer Küstenregion erzeugt werden kann, wobei das Radarbild in ein Wassersegment und ein Landsegment segmentiert werden kann, wobei zumindest ein Abschnitt des Radarbildes durch eine Multiskalentransformation in einen transformierten Radarbilddatensatz transformiert werden kann, wobei eine Multiskalentransformation eine Transformation bezeichnet, die das Radarbild in unterschiedlichen Auflösungsstufen transformiert, wobei der transformierte Radarbilddatensatz Bildinformationen in oder kodiert in unterschiedlichen Skalierungen des Bildes enthält, wobei durch eine Dimensionsreduktionsoperation ein reduzierter transformierter Radarbilddatensatz bereitgestellt werden kann, wobei durch die Dimensionsreduktionsoperation eine Dimension des transformierten Radarbilddatensatzes reduziert werden kann, während isometrische Eigenschaften oder isometrische Informationen, die in dem transformierten Bilddatensatz kodiert sind, bewahrt werden können, wobei ein Ähnlichkeitsgrad einer Ähnlichkeit zwischen dem reduzierten transformierten Radarbilddatensatz und mindestens einem auf einer Landkarte basierenden Bezugs-Bilddatensatz bestimmt werden kann, wobei dem auf einer Landkarte basierenden Bezugs-Bilddatensatz eine Positionsinformation zugeordnet wird, wobei der reduzierte transformierte Radarbilddatensatz und der auf einer Landkarte basierende Bezugs-Bilddatensatz als korrespondierende Bilddatensätze klassifiziert werden können, wenn ein Ähnlichkeitskriterium erfüllt wird, wobei die Position (P) des Wasserfahrzeugs abhängig von der Positionsinformation bestimmt wird, die dem auf einer Landkarte basierenden Bezugs-Bilddatensatz zugeordnet wird, wenn der reduzierte transformierte Radarbilddatensatz und der auf einer Landkarte basierende Bezugs-Bilddatensatz als korrespondierende Bilddatensätze klassifiziert werden.

## Revendications

1. Procédé pour la détermination d'une position (P) d'un véhicule aquatique, dans lequel une image radar d'une région côtière est générée par un système de capteur radar embarqué (3), dans lequel
- l'image radar est segmentée en un ou plusieurs segments d'eau et un ou plusieurs segments de terre,
- au moins une portion de l'image radar est transformée par une transformation à échelles multiples en un ensemble de données d'image radar transformée, dans lequel une transformation à échelles multiples désigne une transformation qui transforme l'image radar en différents niveaux de résolutions, dans lequel l'ensemble de données d'image radar transformée contient des informations d'image sur ou codées dans des échelles différentes de l'image,
- un ensemble de données d'image radar transformée réduit est fourni par une opération de réduction de dimension, dans lequel une dimension de l'ensemble de données d'image radar transformée est réduite par l'opération de réduction de dimension tandis que des caractéristiques isométriques ou des informations isométriques codées dans l'ensemble de données d'image transformée sont préservées,
- une mesure de similarité d'une similarité entre l'ensemble de données d'image radar transformée réduit et un ensemble de données d'image de référence basé sur une carte est déterminée, dans lequel des informations de position sont assignées à l'ensemble de données d'image de référence basé sur une carte,
- l'ensemble de données d'image radar transformée réduit et l'ensemble de données d'image de référence basé sur une carte sont classifiés en tant qu'ensembles de données d'image correspondants si un critère de similarité est satisfait,
- la position du véhicule aquatique est déterminée en fonction des informations de position assignées à l'ensemble de données d'image de référence basé sur une carte si l'ensemble de données d'image radar transformée réduit et l'ensemble de données d'image de référence basé sur une carte sont classifiés en tant qu'ensembles de données d'image correspondants.

2. Procédé selon la revendication 1, **caractérisé en ce que** l'ensemble de données d'image de référence basé sur une carte est généré par transformation d'au moins une portion de l'image basée sur une carte par la transformation à échelles multiples en ensemble de données d'image basée sur une carte transformée, dans lequel une dimension de l'ensemble de données d'image basé sur une carte transformée est réduite par l'opération de réduction de dimension.

3. Procédé selon la revendication 1 ou 2, **caractérisé en ce que** l'image radar et l'image basée sur une carte sont des images binaires.

4. Procédé selon l'une des revendications 1 à 3, **caractérisé en ce que** la carte est fournie par une carte nautique ou une carte terrestre.

5. Procédé selon l'une des revendications 1 à 4, **caractérisé en ce que** de multiples ensembles de données d'image de référence basés sur une carte sont déterminés, dans lequel la mesure de similarité de la similarité entre les données d'image radar transformée réduites et au moins deux ensembles de données d'image de référence basés sur une carte est déterminée.

6. Procédé selon la revendication 5, **caractérisé en ce que** l'ensemble de données d'image radar transformée réduit et un ensemble de données d'image de référence basé sur une carte sélectionné sont classifiés en tant qu'ensembles de données d'image correspondants si le critère de similarité est satisfait, et la mesure de similarité est plus élevée que les mesures de similarité restantes.

7. Procédé selon la revendication 6, **caractérisé en ce que** la mesure de similarité la plus élevée est déterminée sur la base d'une approche d'optimisation.

8. Procédé selon l'une des revendications 1 à 7, **caractérisé en ce que** la mesure de similarité est déterminée en fonction d'une distance entre l'ensemble de données d'image radar transformée réduit et un ensemble de données d'image de référence basé sur une carte sélectionné.

9. Procédé selon l'une des revendications 1 à 8, **caractérisé en ce que** la transformation à échelles multiples est une transformée à crêtelettes, une transformée à courbelettes, une transformée par ondelettes ou une transformée à cosinus.

10. Procédé selon l'une des revendications 1 à 9, **caractérisé en ce que** l'image ou au moins une portion de celle-ci est transformée par une opération de transformation, dans lequel un schéma de pixel de transformation d'une taille et/ou d'un type prédéterminés est décalé sur l'image, dans lequel à chaque position de décalage du schéma de pixel de transformation, une somme des produits d'intensité de pixel est calculée, dans lequel la somme fournit une partie de l'ensemble de données d'image transformée.

11. Procédé selon la revendication 10, **caractérisé en ce que** l'ensemble de données d'image transformée est déterminé par une pluralité d'opérations d'informations de transformation, dans lequel une taille et/ou un type du schéma de pixel de transformation et/ou une taille de l'image est varié pour des opérations de transformation différentes.

12. Procédé selon l'une des revendications 1 à 11, **caractérisé en ce qu'**une mesure de similarité basée sur l'image d'une similarité de la portion d'image radar correspondant à l'ensemble de données d'image radar transformée réduit et la portion d'image basée sur une carte correspondant à l'ensemble de données d'image de référence basé sur une carte est déterminée, dans lequel l'ensemble de données d'image radar transformée réduit et l'ensemble de données d'image de référence basé sur une carte sont classifiés en tant qu'ensembles de données d'image correspondants si un critère de similarité basé sur l'image est satisfait.

13. Procédé selon l'une des revendications 1 à 12, **caractérisé en ce qu'**une opération de réduction est une projection aléatoire, dans lequel la projection aléatoire désigne une multiplication avec une matrice de réduction, dans lequel une valeur aléatoire d'une distribution de probabilité prédéterminée ou fournie par celle-ci est assignée à chaque entrée de la matrice de réduction.

14. Procédé selon l'une des revendications 1 à 13, **caractérisé en ce qu'**au moins un point de repère est identifié dans l'image basée sur un radar, dans lequel un point de repère correspondant est identifié dans une image basée sur une carte, dans lequel la segmentation de l'image radar en un segment d'eau et un segment de terre est réalisée à l'aide d'informations de l'image basée sur une carte.

15. Dispositif pour la détermination d'une position (P) d'un véhicule aquatique, dans lequel le dispositif est conçu pour réaliser un procédé selon l'une des revendications 1 à 14, dans lequel le dispositif comprend un système de capteur radar embarqué et au moins une unité d'évaluation, dans lequel une image radar d'une région côtière peut être générée par le système de capteur radar embarqué, dans lequel l'image radar peut être segmentée en un segment d'eau et un segment de terre, dans lequel au moins une portion de l'image radar peut être transformée par une transformation à échelles multiples en un ensemble de données d'image radar transformée, dans lequel une transformation à échelles multiples désigne une transformation qui transforme l'image radar en différents niveaux de résolutions, dans lequel l'ensemble de données d'image radar transformée contient des informations d'image sur ou codées dans des échelles différentes de l'image, dans lequel un ensemble de données d'image radar transformée réduit peut être fourni par une opération de réduction de dimension, dans lequel une dimension de l'ensemble de données d'image radar transformée peut être réduite par l'opération de réduction de dimension tandis que des caractéristiques isométriques ou des informations isométriques codées dans l'ensemble de données d'image radar transformée peuvent être préservées, dans lequel une mesure de similarité d'une similarité entre l'ensemble de données d'image radar transformée réduit et au moins un ensemble de données d'image de référence basé sur une carte peut être déterminée, dans lequel une information de position est assignée à l'ensemble de données d'image de référence basé sur une carte, dans lequel l'ensemble de données d'image radar transformée réduit et l'ensemble de données d'image de référence basé sur une carte peuvent être classifiés en tant qu'ensembles de données d'image correspondants si un critère de similarité est satisfait, dans lequel la position (P) du véhicule aquatique peut être déterminée en fonction de l'information de position assignée à l'ensemble de données d'image de référence basé sur une carte si l'ensemble de données d'image radar transformée réduit et l'ensemble de données d'image de référence basé sur une carte sont classifiés en tant qu'ensembles de données d'image correspondants.
